# EUROPÄISCHE PATENTSCHRIFT

(11) **EP 1 717 107 B1**
(45) Veröffentlichungstag und Bekanntmachung des Hinweises auf die Patenterteilung: **24.09.2014**
(21) Anmeldenummer: 06405158.4
(22) Anmeldetag: 12.04.2006
(51) Int. Cl.: B60R 19/24

(54) **Stossstange mit Halterungen**
Bumper provided with supports
Pare-chocs pourvu de supports de fixation

(30) Priorität: 27.04.2005 DE 202005006731 U; 24.05.2005 DE 202005008321 U
(43) Veröffentlichungstag der Anmeldung: 02.11.2006
(73) Patentinhaber: Constellium Switzerland AG, 8048 Zürich (CH); Daimler AG, 70327 Stuttgart (DE)
(72) Erfinder: Frank, Simon, 78250 Tengen (DE); Rebstock, Thomas, 78247 Hilzingen (DE)
(74) Vertreter: Wagner, Kilian

(56) Entgegenhaltungen:
- DE-A1- 10 226 527
- GB-A- 261 213
- US-A- 4 974 891
- US-A- 5 727 827
- US-A1- 2003 218 343
- US-A1- 2004 232 711
- US-B1- 6 371 541
- PATENT ABSTRACTS OF JAPAN Bd. 010, Nr. 342 (M-536), 19. November 1986 (1986-11-19) -& JP 61 143241 A (NISSAN MOTOR CO LTD), 30. Juni 1986 (1986-06-30)

## Beschreibung

Die Erfindung betrifft eine Stoßstange mit an dieser anzubringenden Halterungen zum Befestigen an Längsträgern eines Fahrzeuges nach dem Oberbegriff des Anspruchs 1, wie sie aus der DE 298 23 973 U1 bekannt ist. Durch die DE 298 23 973 U1 wird insbesondere eine leichte Stoßstange vorgeschlagen, die in stark belasteten Bereichen durch ein zusätzliches Profil verstärkt werden. Dabei kann das Verstärkungsprofil auch aus einem Teil einer Haltevorrichtung für die Stoßstange bestehen. In letzterem Fall erweitern sich die Seitenwände der Haltevorrichtung konisch und kommen mit den Profilleisten der Stoßstange in Anlage.

Eine Stoßstange mit die Längsachse ihres Längsträgers querenden plattenartigen Halterungen beschreibt die EP 0 718 158 B1 unter Hinweis darauf, dass neben der Querschnittsform der Stoßstange auch die Ausgestaltung der Verbindung zum Fahrzeuglängsträger deren Formhaltigkeit beeinflusst sowie deren Kompensationsvermögen für die auftreffende Verformungsenergie.

Zum Befestigen der Stoßstange am Fahrzeug sind eine Vielzahl von Halterungen bekannt -- beispielsweise aus US-A-5, 080, 410 oder US-A-4,563,028 --, die jedoch kaum zur Verbesserung der Formhaltigkeit einer Stoßstange bei einem Aufprall beizutragen vermögen.

In der EP 0 894 675 Al ist eine Stoßstangenanordnung beschrieben, bei dem sich die Halteelemente der Stoßstange konisch aufweiten, und so deren Außenwände sich an die Profilwand der Stoßstange anschmiegen, bzw. in diese übergehen.

Weiterhin ist aus der JP 61-143241 A eine Anordnung aus einer Stoßstange mit Halterungen zur Befestigung an Längsträgern eines Fahrzeugs bekannt.

In Kenntnis dieser Gegebenheiten hat sich der Erfinder das Ziel gesetzt, eine Stoßstange der eingangs erwähnten Art zu schaffen, die bei geringem Gewicht ein hohes Maß an Formhaltigkeit bei ausreichendem Kompensationsvermögen für die auftreffende Verformungsenergie aufweist, also ein effizientes Energieabsorptionselement entsteht. Zudem sollen Herstellung und Handhabung der Stoßstange sowie der Halterung sehr einfach und die Längsträgerkräfte niedriger sowie zentral sein.

Diese Aufgabe wird bei einer Stoßstange mit Halterungen mit den Merkmalen des Anspruchs 1 dadurch gelöst, dass an der Stoßstange in Abstand zueinander als Druckgurt bzw. Zuggurt angeordnete Profilwände und ein Paar diese verbindender Flankenwände ein Hohlprofil bilden, dass die Halterung mehrere zu ihrer Mittellinie parallele Kammern aufweist, die durch die beiden Seitenwände sowie durch sich zwischen diesen erstreckende Innenplatten begrenzt sind, dass eine mittlere Kammer des Steckabschnitts vorgesehen ist, die von zwei an die Querwände anschließenden äußeren Kammern begrenzt ist, dass in Abstand zur Endkante des Steckabschnitts eine Querachse verläuft, welche die Lage von Einsatzdurchbrüchen in den Randstreifen der Seitenwände bestimmt, und dass in die äußere Kammer ein Einsatzelement eingebracht ist, das einen den Einsatzdurchbrüchen des Steckabschnitts mit deren Querachse zuzuordnenden Rohrkanal aufweist.

Vorteilhafte Weiterbindungen sind in den Unteransprüchen aufgeführt.

Der Hohlprofilträgerabschnitt der als Hohlprofil ausgebildeten Halterung ist als Steckabschnitt dem inneren Querschnitt des Längsträgers angepasst; der andere Endbereich der Halterung ist mit von deren Stirnkante abragenden Kragorganen ausgestattet, die etwa parallel zu den Querwänden des Hohlprofils gerichtet sind. Diese Kragorgane der Halterung sind in Gebrauchsstellung den Flankenwänden der Stoßstange zugeordnet und mit diesen lösbar verbunden, bevorzugt verschraubt.

Andernends wird die Halterung im Längsträger ebenfalls lösbar verschraubt und bildet so ein effizientes Energieabsorptionselement.

Dieses Energieabsorptionselement wird als Mehrkammerprofil ausgebildet. Dann soll die Halterung mehrere zu ihrer Mittellinie parallele Kammern enthalten, die durch die beiden Seitenwände sowie durch sich zwischen diesen erstreckende Innenplatten begrenzt sind. Dazu hat sich eine mittlere Kammer des Steckabschnitts als günstig erwiesen, die von zwei an die Querplatten anschließenden äußeren Kammern kleineren Volumens begrenzt ist.

Nach einer Ausgestaltung der Erfindung ist in die Seitenwand der Halterung etwa in ihrer Höhenmitte -- in Anpassung an die Gestalt des Längsträgers -- ein Längsstreifen eingeformt, dessen Breite bevorzugt etwa einem Drittel bis zur Hälfte der Höhe der Halterung entspricht.

Der Längsstreifen ist beidseits von jeweils einem Falzstreifen begrenzt, der vom Längsstreifen nach außen aufwärts geneigt sowie an beidseits verlaufende Randstreifen der Seitenwand in deren Ebene angeformt ist; die Seitenwand bietet also ein gestuftes Profil aus drei streifenartigen Bereichen an. Zudem soll in dem Halterungsprofil beidseits des Längsstreifens -- bzw. von den an dessen Falzstreifen anschließenden Randstreifen -- jeweils eine der sich zwischen beiden Seitenwänden erstreckenden Innenplatten angeordnet sein. Letztere verlaufen vorteilhafterweise innerhalb zweier von den plattenartigen Kragorganen bestimmten Ebenen. Diese Kragplatten sollen jeweils durch einen längsschnittlich gekrümmten Zungenabschnitt an eine der Querplatten des Steckabschnitts angeformt sein sowie Schrauben aufnehmende Durchbrüche anbieten.

In einer anderen Ausgestaltung der Kragorgane sind diese zwei rinnenartigen Anformungen mit von der Mittellinie der Halterung weg weisenden Oberkanten von Flankenwänden; diese verlaufen jeweils bevorzugt in der Ebene einer Seitenwand, insbesondere in deren Randstreifen. Der Rinnenboden dieses rinnenförmigen Kragorganes geht in -- etwa axialem -- Abstand zu dessen Rinnenstirn in eine aufwärts gerichtete Neigungsebene über, die andernends an die Querplatte angefügt ist.

Als günstig hat sich auch erwiesen, sowohl den Rinnenboden als auch die Flankenwände doppellagig auszubilden; der Rinnenboden soll aneinanderliegende Abschnitte einer Querplatte sowie einer Innenplatte enthalten, die Flankenwände bevorzugt -- ebenfalls aneinanderliegende -- Abschnitte der jeweiligen Seitenwand bzw. eines Randstreifens.

Nach einer weiteren Ausgestaltung der Erfindung ist die von den beiden Rinnenanformungen der Halterung axial überragte Endkante des Längsstreifens beidseits der Mittellinie jeweils mit einem Kragstreifen versehen, der eine seitliche Lagesicherung anbietet; dieser Kragstreifen ist an das freie Ende des Längsstreifens angeordnet.

Nach einer weiteren Ausgestaltung der Erfindung verläuft in Abstand zur Endkante des Steckabschnitts eine Querachse, welche die Lage von Einsatzdurchbrüchen in den Randstreifen der Seitenwände bestimmt; jener Abstand soll höchstens der Breite des Steckabschnitts entsprechen.

Die Bodenplatte endet an der dem Blockkörper fernen Kante bevorzugt mit einer Kantenrinne, die mit der vom Blockkörper fernen Oberfläche der Bodenplatte einen Schlitz begrenzt; in Einbaulage des Blockkörpers nimmt die Kantenrinne die Querkante der anliegenden Innenplatte auf. Auch hat es sich als günstig erwiesen, dass in Einbaulage des Blockkörpers dessen Stirnfläche der Außenfläche einer rinnenartigen Quermulde außenseitig anliegt, die in die zugeordnete Querplatte eingeformt ist.

Die Halterung wird mit dem Längsträger -- wie gesagt -- verschraubt. Beispielsweise kann die Endkante zur Mittellinie der Halterung in einem Winkel geneigt sein und dann durch drei Stiftschrauben festgelegt werden. Jedoch kann der Längsträger auch mit zwei oder vier -- quer zur Mittellinie verlaufenden -- Stiftschrauben angeschlossen werden, und die Schrauben durchgreifen jeweils die Profilwände von Längsträger und Halterung.

Es wird deutlich, dass die Halterung als Energieabsorptionselement geradlinig ausgebildet und stirnseitig mit den beiden Kragplatten über oder unter die obere und die untere Flankenwand der Stoßstange geschoben wird. Hierzu sind unter Ausbildung eines U-förmigen Endabschnitts Ausnehmungen in den Seitenwänden des Energieabsorptionselements vorgesehen.

Wenigstens eine der Profilwände -- vorzugsweise jedoch alle Profilwände -- des Energieabsorptionselements liegt den Längsträgerprofilwänden innenseitig an; dieses lässt sich dann formschlüssig in den Längsträger einschieben.

Der Querschnitt des Energieabsorptionselements und des Längsträgers kann -- wie beschrieben -- Sicken bzw. Einbuchtungen od.dgl. Längsstreifen zum Führen bzw. Ausrichten und Fixieren des Energieabsorptionselements beim Einschieben in den Längsträger enthalten. In seinem stirnseitigen Endabschnitt weist das Energieabsorptionselement eine U-förmige Ausgestaltung auf; seine vertikalen Profilwände sind im Profilendabschnitt entfernt, so dass die obere und die untere Seitenwand des Energieabsorptionselements über das Ende der Vertikalwände hinaus vorstehen. Die obere und untere Profilwand des Halteelements wird -- wie erwähntüber die obere und untere Profilwand der Stoßstange geschoben, wobei die Stirnseite der Vertikalwände des Energieabsorptionselements etwa dem Zuggurt der Stoßstange ansteht. Die diese übergreifenden oberen und unteren Profilwände des Energieabsorptionselements sind mit der Stoßstange bzw. mit deren oberen und unteren Profilwänden mittels einer oder mehreren Schraubverbindungen verbunden.

An dem zur Stoßstange gerichteten Endabschnitt der Halterung können die Vertikalwände des Energieabsorptionselements zwischen den beiden Innenplatten entfernt sein. Die obere Profilwand liegt im Profilendabschnitt unter Ausbildung einer offenen U-förmigen Rinne der oberen Innenplatte an. Die untere Profilwand liegt im Profilendabschnitt unter Ausbildung einer offenen U-förmigen Rinne der unteren Innenplatte an. Die obere und untere Profilwand sind hierzu einwärts gegen die Hohlkammer gefaltet, und beide bilden zusammen mit den vertikalen Profilwänden im Bereich der Innenplatten sowie mit den Innenplatten einen doppelwandigen Rinnenquerschnitt aus. Die Rinnenquerschnitte überlappen die Stoßstange und sind mit dieser verschraubt. Das Einwärtsfalten der oberen und unteren Profilwände an ihrem vorderen Endabschnitt kann mittels Quetschen, Rollquetschen, Stempeldruck od.dgl. erfolgen.

Weitere Vorteile und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf eine Stoßstange nach US 2004/023711 A1 mit -- an beiden Enden der Stoßstange unterschiedlich ausgebildeten --Halterungen zum Anschluss an einen Längsträger;
- Fig. 2:: eine Schrägsicht auf einen Teil der Stoßstange der Fig. 1 mit Halterung;
- Fig. 3:: eine Schrägsicht auf einen Teil einer Stoßstange nach der Erfindung mit diese an den Längsträger anschließendem Profilelement als Halterung;
- Fig. 4:: eine gegenüber Fig. 3 vergrößerte Schrägsicht auf das Profilelement;
- Fig. 5:: die verkleinerte Stirnansicht des Profilelements;
- Fig. 6:: ein vergrößertes Detail aus Fig. 4;
- Fig.7, 10:: das Detail der Fig. 6 in zwei anderen Ausgestaltungen;
- Fig. 8, 9:: Frontansicht und Draufsicht zu Fig. 7;
- Fig. 11, 15:: jeweils eine Schrägsicht auf einen Teil eines Längsträgers mit an diesem festgelegter Halterung;
- Fig. 13 bis 14, 16:: jeweils einen Teil eines geschnittenen Längsträgers mit eingeschobener Halterung;
- Fig. 17:: die vergrößerte Frontansicht zu einer in den Fig. 11 bis 15 angedeuteten Rinnenanformung der Halterung.

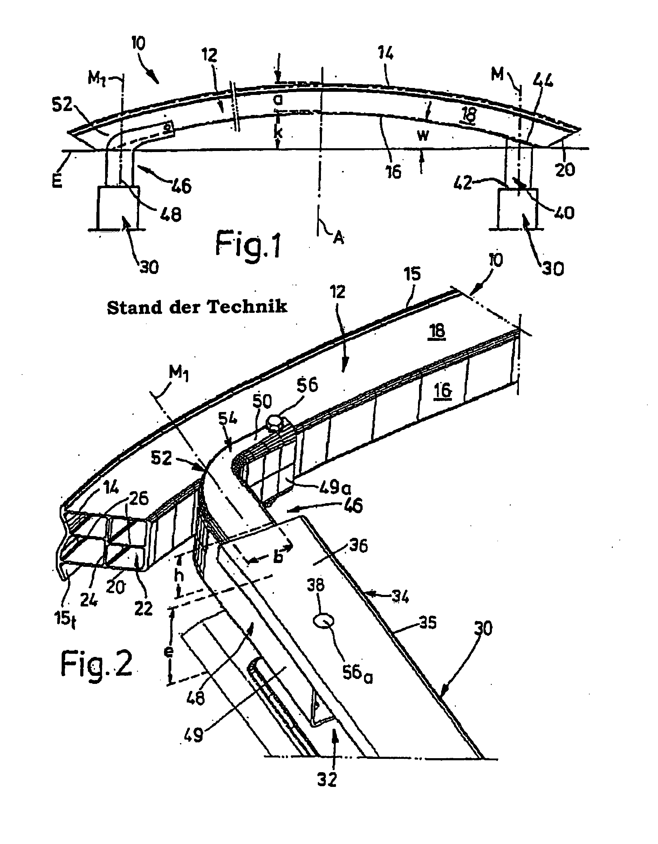

Eine aus einer Aluminiumlegierung stranggepresste Stoßstange 10 für einen aus Gründen der Übersichtlichkeit nicht wiedergegebenen Personenkraftwagen weist gemäß Fig. 1 ein kastenförmiges Hohlprofil 12 mit zwei in Abstand a zueinander verlaufenden Profilwänden 14, 16 auf, die durch zwei Quer- oder Flankenwände 18 verbunden sind. Das Hohlprofil 12 ist einer -- zu der bei A angedeuteten Fahrzeuglängsachse im rechten Winkel verlaufenden -- Querebene E zugeordnet sowie beidseits der hier eine Symmetrieebene bildenden Fahrzeuglängsachse A zu jener Querebene E hin gleichmäßig gekrümmt; zu dieser hin bestimmt das Hohlprofil 12 in der im Krümmungszenit liegenden Längsachse A ein Krümmungsmaß k. In Einbaulage bildet die von der Querebene E weg weisende äußere Profilwand 14 einen -- Stoßkräfte aufnehmenden -- Außen- oder Druckgurt, die andere -- innere -- Profilwand 14 einen Innen- oder Zuggurt.

Die Stoßstange 10 ist Fahrzeuglängsträgern 30 zugeordnet, die parallel zur Fahrzeuglängsachse A verlaufen. Sie sind ihrerseits aus zwei parallelen Seitenwänden 34 und diese verbindenden Querwänden 36 zusammengesetzt, die einen Innenraum 32 des Fahrzeuglängsträgers 30 begrenzen.

Nahe der rechten Stirnkante 20 des Hohlprofils 12 ist in Fig. 1 ein rohrartiges Deformationsorgan 40 aus einem Profilstück angedeutet, das zum einen an der inneren Profilwand 16 angebracht sowie andernends mit einem Steckabschnitt 42 dem Fahrzeuglängsträger 30 zugeordnet ist. Das Deformationsorgan 40 ist ebenfalls aus einem aus Leichtmetall stranggepressten Profilelement gefertigt sowie an dem der Stoßstange 10 zugewandten Ende angeschrägt; die so entstehende Schrägkante 44 des Profilelements 40 bestimmt mit der Querebene E einen Winkel w von beispielsweise 10°.

Eine andere Ausgestaltung des Anschlusses des Hohlprofils 12 an den Fahrzeug-Längsträger 30 ist an dem in Fig. 1 linken Ende der Stoßstange 10 skizziert sowie der Fig. 2 zu entnehmen. Deutlich wird hier, dass die als Außengurt dienende -- in sich querschnittlich wellenartig gestaltete -- Profilwand 14 beide Quer- oder Flankenwände 18 mit flügelartigen Wandabschnitten als Kantenstreifen 15, 15ₜ übergreift. Auch lässt Fig. 2 erkennen, dass die Seitenwand 34 des Fahrzeuglängsträgers 30 ebenfalls mit einem Kantenstreifen 35 die Außenfläche der angefügten Querwand 36 überragt. Im übrigen ist die zweite Seitenwand 34 aus Gründen der Übersichtlichkeit nicht eingezeichnet.

Im Profilinnenraum 22 des Hohlprofils 12 ist einstückig mit den Profilwänden 14, 16 sowie den diese verbindenden Flankenwänden 18 eine -- parallel zu den Profilwänden 14, 16 gerichtete -- Querwand 24 mit jeweils einer zwischen dieser und den Profilwänden 14, 16 verlaufenden Mittelwand 26 vorgesehen. Diese Mittelwände 26 sind zueinander erkennbar seitenversetzt.

Der Anschluss des Hohlprofils 12 an den Fahrzeuglängsträger 30 wird hier durch ein aus einem -- seinerseits aus einer Aluminiumlegierung stranggepressten -- Hohlprofil der Breite b von beispielsweise 55 mm sowie der Höhe h von 75 mm als Halteglied 46 hergestellt. An dessen dem Fahrzeuglängsträger 30 der Profilhöhe e zugeordneten und in diesem verschraubten Steckabschnitt 48 etwa rechteckigen Querschnitts -- aus zwei parallelen Seitenwänden 49, 49ₐ und diese verbindenden Querwänden 50 des Hohlprofils der Halterung 46 -- schließt ein Krümmungsabschnitt 52 an; die in Fig. 2 rechte Seitenwand 49ₐ ist nach außen -- also hier aus der Längsachse M₁ des Steckabschnittes 48 nach rechts -- gekrümmt und die andere Seitenwand 49 endwärts an diese so herangeführt, dass beide Seitenwände 49, 49ₐ aufeinanderliegen und jede der beiden Querwände 50 etwa in ihrer Mitte gefaltet ist. Dabei verläuft die innere Krümmungskontur entsprechend der Außenfläche der inneren Profilwand 16 des Hohlprofils 12, d.h. sie schließt mit einer Parallelen zur Querebene E den erwähnten Winkel w ein.

Die doppellagigen Schenkel 54 des so entstandenen rinnenartigen Krümmungsabschnitts 52 werden im Bereich von -- in der Zeichnung nicht erkennbaren -- Durchbrüchen von Schrauben 56 od.dgl. Verbindungsorganen durchsetzt, welche zudem in stoßstangenseitige Durchbrüche der Flankenwände 18 eingreifen. Entsprechende Durchbrüche für Verbindungsorgane 56ₐ sind im Steckabschnitt 48 des Haltegliedes 46 vorgesehen. Diese Verbindungsorgane 56ₐ lagern im Fahrzeuglängsträger 30 in Durchbrüchen 38.

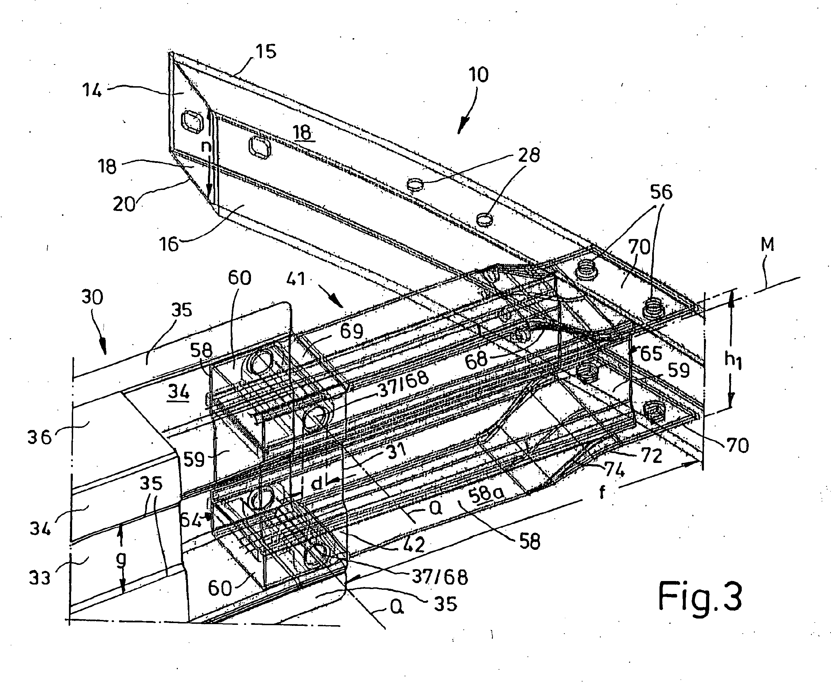

Fig. 3 zeigt eine Stoßstange 10 mit den oben erwähnten Durchbrüchen 28 in ihren Flankenwänden 18. Auch ist in Abstand f zur Stoßstange 10 der Endbereich eines Fahrzeuglängsträgers 30 zu erkennen. In jede von dessen Seitenwänden 34 ist -- etwa in Höhenmitte -- ein von Falzstreifen 39 begrenzter Längsstreifen 33 eingeformt, dessen Breite g etwa einem Drittel bis zur Hälfte der Profilhöhe e entspricht.

In das freie Ende des Fahrzeuglängsträgers 30 wird ein Hohlprofilträgerabschnitt als Steckabschnitt 42 eines Deformationsorgans oder Profilelementes 41 eingeschoben, dessen i.w. rechteckiger Querschnitt von Seitenwänden 58 und Querwänden 60 bestimmt wird. Jede der beiden Seitenwände 58 enthält -- entsprechend der Formgebung der Seitenwand 34 des Fahrzeuglängsträgers 30 -- einen in Höhenmitte eingeformten Längsstreifen 59 der Tiefe q. Des Längsstreifens 59 Längskanten werden jeweils von einem Falzstreifen 57 gebildet, der in sich nach außen -- aufwärts -- gekrümmt ist sowie in einen Streifen 58ₐ der Seitenwand 58 übergeht. In geringem Abstand zu jedem der beiden Falzstreifen 57 der Seitenwand 58 verlaufen in dem Profilelement 41 zu den Querwänden 60 parallele Innenplatten 62, deren Querkanten 63 Querlinien in der Endkante 64 des Profilelements 41 bilden sowie beidseits einer mittigen Hauptkammer 66 des Profilelements 41 zwei Seitenkammern 67 begrenzen.

Beidseits des eingeformten Längsstreifens 59 ist in die Seitenwand 58 jeweils ein Einsatzdurchbruch 68 des Durchmessers d für einen -- Fahrzeuglängsträger 30 und Profilelement 41 haltend durchgreifenden -- Verbindungsstift eingebracht. Entsprechend bietet der Fahrzeuglängsträger 30 in seinen Seitenwänden 34 Einsatzdurchbrüche 37 an.

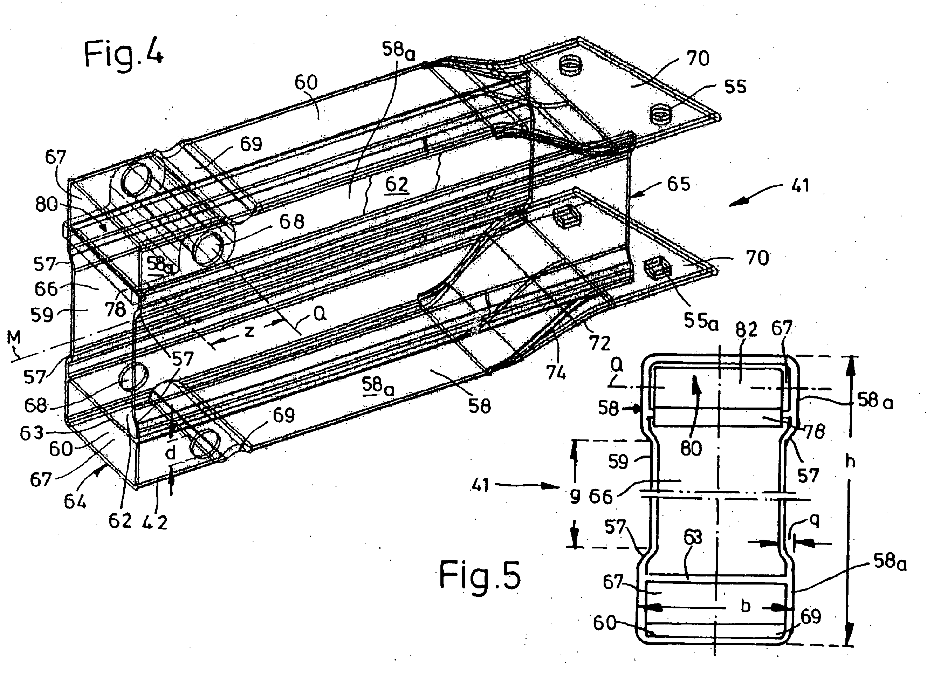

In Fig. 3 ist nahe der Stirnkante 31 des Fahrzeuglängsträgers 30 in den Querwänden 60 des Profilelements 41 jeweils eine Quermulde 69 etwa halbkreisförmigen Querschnitts zu erkennen, die parallel zu einer von jenen Einsatzdurchbrüchen 37, 68 bestimmten Querachse Q eingeformt ist. Deren Abstand von der Endkante 64 des Profilelements 41 ist in Fig. 4 mit z kenntlich gemacht.

Die Endhöhe h₁ des der Stoßstange 10 zugeordneten Endes des Profilelementes 41 ist der freien Innenhöhe n der Stoßstange 10 angepasst. Diese Endhöhe h₁ wird bestimmt von den Außenflächen zweier Kragplatten 70 als Endbereiche der Querwände oder -platten 60, die über die -- in Fig. 3, 4 rechts verlaufende -- Stirnfläche 65 des Profilelements 41 hinausragen und mittels eines längsschnittlich gekrümmten Zungenabschnitts 72 an die jeweilige Querplatte 60 angefügt sind. Aus der Ebene jener Querplatte 60 sind zur Mittelachse M des Profilelements 41 hin längsschnittlich gebogene Zwischenabschnitte 74 der Querplatte 60 herausgeformt. Diese liegen der Außenfläche der benachbarten Innenplatte 62 an. Die beiden Kragplatten 70 schmiegen sich den Querwänden 18 der Stoßstange 10 innenseitig an und sind mit diesen durch Schrauben 56 verbunden, welche Durchbrüche 55, 55ₐ durchgreifen.

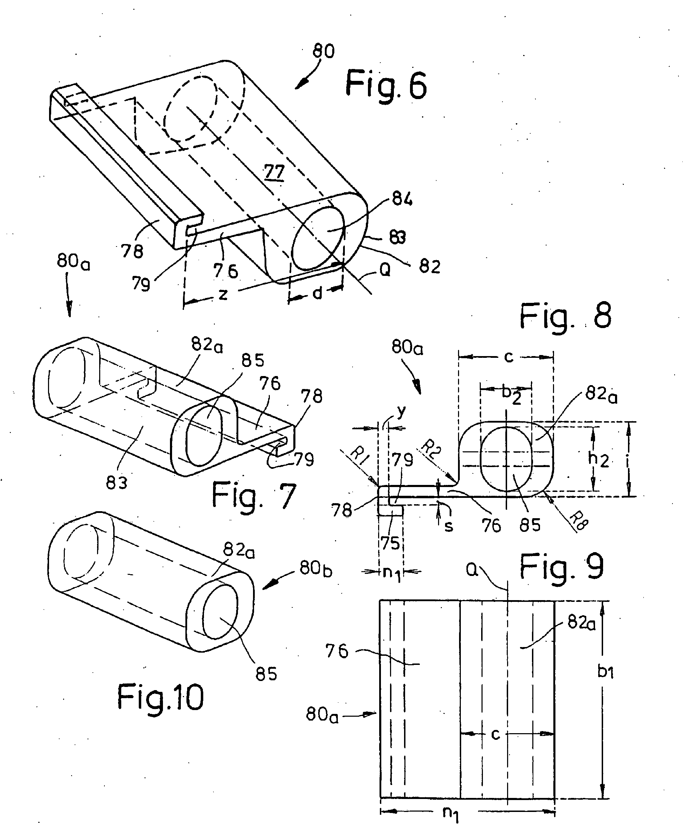

Zwischen die erwähnten Innenplatten 62 und die ihr benachbarte Querplatte 60 des Profilelements 41 ist in die Seitenkammer 67 ein gesondertes Einsatzelement 80 eingeschoben, das in Fig. 6 detailliert skizziert ist. Der Innenplatte 62 des Profilelements 41 liegt in Einbaustellung jenes Einsatzelement 80 dessen Bodenplatte 76 auf, die an einen blockartigen Körper 82 so angeformt ist, dass sie tangential von diesem abragt. Ein Rohrkanal 84, dessen Durchmesser d jenem der Einsatzdurchbrüche 37, 68 entspricht, wird in der Querachse Q zentriert, wenn eine Kantenrinne 78 der Bodenplatte 76 mit von deren Oberfläche 77 einseitig begrenzten plattenparallelem Schlitz 79 die Endkante 63 der diese Oberfläche 77 berührenden Innenplatte 62 umgreift. Der Block- oder Rohrkörper 82 liegt dann mit seiner -- in Fig. 6 rechten -- teilkreisförmig gekrümmten Stirnfläche 83 der Außenfläche der in die benachbarte Querplatte 60 eingeformten rinnenartigen Quermulde 69 an.

Eine andere Ausgestaltung des Einsatzelementes 80ₐ nach Fig. 7 bis 9 enthält im Rohrkörper 82ₐ der Breite c von 26 mm sowie der Höhe i von 21 mm einen querschnittlich ovalen Kanal 85 der Breite b₂ von 14 mm und der Höhe h₂ von 18 mm. Die Dicke y der Bodenplatte 76 beträgt hier 3 mm bei einer Höhe s des Schlitzes 79 der Kantenrinne 78 von 2,2 mm; deren kurzer Schenkel 75 bietet eine Länge y₁ von 7 mm an bei einer Gesamtlänge n₁ des Einsatzelementes 80ₐ von etwa 49 mm und dessen Breite b₁ von etwa 55 mm.

Das Einsatzelement 80_{b} der Fig. 10 besteht aus dem Rohrkörper 82ₐ mit den zu Fig. 8 genannten spezifischen Maßen, hat also keine Bodenplatte.

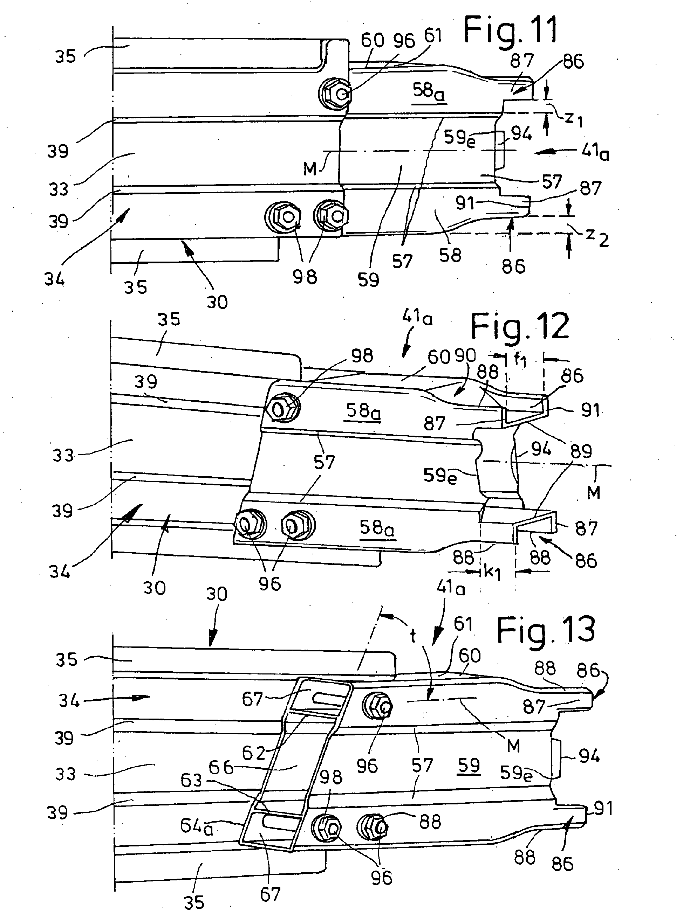

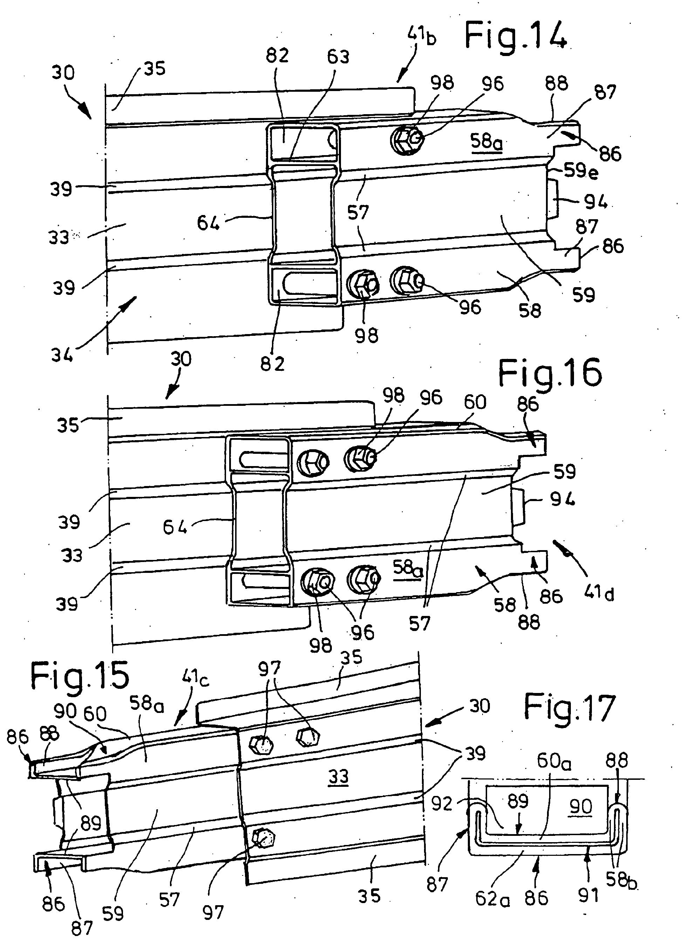

Die Fig. 11 bis 13 zeigen ein Profilelement 41ₐ mit in einem Winkel t von etwa 70° zur Mittellinie M geneigter Stirnkante 64ₐ. Dieses ist mittels dreier -- durch Muttern 88 ergänzter -- Stiftschrauben 90 einends festgelegt. Am freien Ende ragen zwei Rinnenanformungen 86 ab, die mit der Stoßstange 10 verschraubt werden. Die beiden Flankenwände 87 der Rinnenanformungen 86 einer Kraglänge k₁ verlaufen in den Ebenen der Randstreifen 58ₐ im Abstand z₁ zu deren Falzstreifen 57, deren Oberkanten 88 im Abstand z₂ zur Oberfläche 61 der Querplatte oder Querwand 60. Diese Flankenwände 87 sind zur Mittellinie M hin an einen Rinnenboden 89 angeformt, der mit einer hinteren Neigungsebene 90 an die Querplatte 60 angeschlossen ist, wie vor allem in Fig. 12, 15 verdeutlicht. Die Neigungsebene 90 beginnt in Abstand f₁ von der Rinnenstirn 91 der Rinnenanformung 86. Im übrigen ist an die freie Endkante 59ₑ jedes Längsstreifens 59 ein schmaler Kragstreifen 94 angeformt.

Insbesondere in Fig. 17 ist verdeutlicht, dass die Rinnenanformung 86 querschnittlich doppelwandig ausgebildet ist; der Rinnenboden 89 wird zum Rinnenraum 92 hin von einem angeformten Abschnitt 60ₐ der Querplatte 60 gebildet, der einem Abschnitt 62ₐ der Innenplatte 62 aufliegt. Die den Rinnenboden 89 seitlich begrenzenden beiden Flankenwände 87 sind von zwei Schichten eines Abschnittes 58_{b} des Randstreifens 58 gebildet.

Die Profilelemente 41_{b}, 41_{c} der Fig. 14, 15 sind -- mit zur Längsachse oder Mittellinie M rechtwinkeliger Stirnkante 64 -- mittels dreier Stiftschrauben 96 festgelegt, das Profilelement 41_{d} der Fig. 12 mit vier Stiftschrauben 96.

Die aus der Stiftschraube 96 bestehende Schraubverbindung durchquert bevorzugt jeweils den gesamten Profilquerschnitt und liegt mit dem Schraubenkopf 97 -- mit oder ohne Unterlagsscheibe -- einer ersten Profilaußenwand 34 und mit ihrer Schraubenmutter 98 -- mit oder ohne Unterlagsscheibe -- einer der ersten im Wesentlichen gegenüberliegenden zweiten Profilaußenwand 34 des Längsträgers 30 an.

## Patentansprüche

1. Stoßstange (10) mit an dieser anzubringenden Halterungen (41, 41a, 41b, 41c, 41d) zum Befestigen an Längsträgern (30) eines Fahrzeuges, wobei die Halterung (41, 41a, 41b, 41c, 41d), zwei gegenüberliegende Seitenwände (58) und zwei an diese anschließende Querwände (60) aufweisendes Hohlprofil mit einem dem Längsträger (30) zugeordneten, als Steckabschnitt (42) dem inneren Querschnitt des Längsträgers (30) angepassten Hohlprofilträgerabschnitt gestaltet sowie der andere Endbereich der Halterung mit ihr abragenden Kragorganen (70, 86) versehen ist und diese parallel zu den Querwänden (60) gerichtet sind, und wobei von der Stirnkante (65) des anderen Endbereichs (65) die Kragorgane (70, 86) als Kragplatten parallel zur Mittellinie (M) der Halterung (41, 41a, 41b, 41c, 41d) abragen sowie der Steckabschnitt (42) an dem Längsträger (30) mit zumindest zwei Stiftschrauben (96) anschließbar ist, welche die Seitenwände (58) des Steckabschnittes (42) durchsetzen,
**dadurch gekennzeichnet,**
**dass** an der Stoßstange (10) in Abstand zueinander als Druckgurt bzw. Zuggurt angeordnete Profilwände (14, 16) und ein Paar diese verbindender Flankenwände (18) ein Hohlprofil (12) bilden, dass die Halterung (41) mehrere zu ihrer Mittellinie (M) parallele Kammern (66, 67) aufweist, die durch die beiden Seitenwände (58) sowie durch sich zwischen diesen erstreckende Innenplatten (62) begrenzt sind, dass eine mittlere Kammer (66) des Steckabschnitts (42) vorgesehen ist, die von zwei an die Querwände (60) anschließenden äußeren Kammern (67) begrenzt ist, dass in Abstand (z) zur Endkante (64) des Steckabschnitts (42) eine Querachse (Q) verläuft, welche die Lage von Einsatzdurchbrüchen (68) in den Randstreifen (58a) der Seitenwände (58) bestimmt, und dass in die äußere Kammer (67) ein Einsatzelement (80) eingebracht ist, das einen den Einsatzdurchbrüchen (68) des Steckabschnitts (42) mit deren Querachse (Q) zuzuordnenden Rohrkanal (84) aufweist.

2. Stoßstange nach Anspruch 1, **dadurch gekennzeichnet, dass** die Kragplatte durch einen längsschnittlich gekrümmten Zungenabschnitt (72) an eine der Querplatten (60) des Steckabschnitts (42) angeformt ist.

3. Stoßstange nach Anspruch 1, **dadurch gekennzeichnet, dass** die Kragorgane (86) zwei rinnenartige Anformungen sind mit von der Mittellinie (M) der Halterung (41a) weg weisenden Oberkanten (88) von einen Rinnenboden (89) begrenzenden Flankenwänden (87).

4. Stoßstange nach Anspruch 1, **dadurch gekennzeichnet, dass** die Kragörgane (70, 86) die Halterung (41, 41a, bis 41d) in Gebrauchsstellung den Flankenwänden (18) der Stoßstange (10) zugeordnet und mit dieser lösbar verbunden sind.

5. Stoßstange nach einem der Ansprüche 1 bis 4, **dadurch gekennzeichnet, dass** in die Seitenwand (58) der Halterung (41) etwa in ihrer Höhenmitte ein Längsstreifen (59) eingeformt ist, dessen Breite (g) bevorzugt etwa einem Drittel bis zur Hälfte der Höhe (h) der Halterung (41, 41a bis 41d) entspricht.

6. Stoßstange nach Anspruch 5, **dadurch gekennzeichnet, dass** der Längsstreifen (59) beidseits von jeweils einem Falzstreifen (57) begrenzt ist, der vom Längsstreifen (59) nach außen aufwärts geneigt sowie an beidseits in der Ebene der Seitenwand (58) verlaufende Randstreifen (58a) angeformt ist.

7. Stoßstange nach einem der Ansprüche 1, 5 oder 6, **dadurch gekennzeichnet, dass** in der Halterung (41, 41a bis 41d) beidseits des Längsstreifens (59) bzw. von dessen Falzstreifen (57) jeweils eine der sich zwischen beiden Seitenwänden (58) erstreckenden Innenplatten (62) angeordnet ist.

8. Stoßstange nach Anspruch 1 oder 7, **dadurch gekennzeichnet, dass** die Innenplatte (62) innerhalb zweier von den plattenartigen Kragorganen (70) bestimmten Ebenen verlaufen.

9. Stoßstange nach Anspruch 3 oder 6, **dadurch gekennzeichnet, dass** die Flankenwand (87) etwa in der Ebene eines der Randstreifen (58a) der Seitenwand (58) verläuft.

10. Stoßstange nach Anspruch 3 oder 9, **dadurch gekennzeichnet, dass** der Rinnenboden (89) des rinnenförmigen Kragorgans (86) in Abstand (f₁) zu dessen Rinnenstirn (91) in eine aufwärts gerichtete Neigungsebene (90) übergeht, die andernends an die Querplatte (60) angefügt ist.

11. Stoßstange nach einem der Ansprüche 3, 9 oder 10, **dadurch gekennzeichnet, dass** sowohl der Rinnenboden (89) des rinnenförmigen Kragorgans (86) als auch die Flankenwände (87) doppellagig ausgebildet sind.

12. Stoßstange nach Anspruch 11, **dadurch gekennzeichnet, dass** der Rinnenboden (89) des rinnenförmigen Kragorgans (86) aneinander liegende Abschnitte (60a, 62a) einer Querplatte sowie einer Innenplatte (62) enthält.

13. Stoßstange nach einem der Ansprüche 3 oder 9 bis 12, **dadurch gekennzeichnet, dass** die Flankenwand (87) aneinanderliegende Abschnitte (58b) der Seitenwand (58) der Halterung (41) enthält, insbesondere Abschnitte von deren Randstreifen (58a).

14. Stoßstange nach einem der Ansprüche 5 bis 13, **dadurch gekennzeichnet, dass** die von den beiden Rinnenanformungen (86) der Halterung (41a) axial überragte Endkante (59e) des Längsstreifens (59) beidseits der Mittellinie (M) jeweils mit einem Kragstreifen (92) versehen ist.

15. Stoßstange nach Anspruch 14, **dadurch gekennzeichnet, dass** der Kragstreifen (92) an das freie Ende des Längsstreifens (59) angeformt ist.

16. Stoßstange nach einem der Ansprüche 2, 3 oder 9 bis 15, **gekennzeichnet durch** Schrauben aufnehmende Durchbrüche (55, 55e) der Kragplatte (70) bzw. der Rinnenanformung (86).

17. Stoßstange nach Anspruch 1, **dadurch gekennzeichnet, dass** der Abstand (z) höchstens der Breite (b) des Steckabschnitts (42) entspricht.

18. Stoßstange nach Anspruch 1, **dadurch gekennzeichnet, dass** der Rohrkanal (84) einen blockartigen Körper (82) durchsetzt, der einer Fläche einer Bodenplatte (76) des Einsatzelements (80) angeformt ist.

19. Stoßstange nach Anspruch 18, **dadurch gekennzeichnet, dass** die Bodenplatte (76) an einer Kantenrinne (78) endet, welche mit der vom Blockkörper (82) fernen Oberfläche (77) der Bodenplatte (76) einen Schlitz (79) begrenzt.

20. Stoßstange nach Anspruch 19, **dadurch gekennzeichnet, dass** in Einbaulage des Blockkörpers (82) die Kantenrinne (78) die Querkante (63) der anliegenden Innenplatte (62) aufnimmt.

21. Stoßstange nach Anspruch 1, **dadurch gekennzeichnet, dass** die Höhe (i) des Einsatzelements (80) in etwa der Höhe der äußeren Kammer (67)entspricht.

22. Stoßstange nach einem der Ansprüche 18 bis 21, **dadurch gekennzeichnet, dass** in Einbaulage des Blockkörpers (82) dessen Stirnfläche (83) der Außenfläche einer rinnenartigen Quermulde außenseitig anliegt, die in die zugeordnete Querplatte eingeformt ist.

23. Stoßstange nach einem der Ansprüche 1 bis 22, **dadurch gekennzeichnet, dass** die Endkante (64) des Steckabschnitts (42) zur Mittellinie (M) der Halterung (41a) in einem Winkel (t) geneigt ist.

24. Stoßstange nach Anspruch 1 oder 23, **gekennzeichnet durch** drei Stiftschrauben (96).

## Claims

1. A bumper (10) with mounts (41, 41a, 41b, 41c, 41d) to be secured thereto for attachment to longitudinal members (30) of a vehicle, wherein the mount (41, 41a, 41b, 41c, 41d) forms a hollow profile exhibiting two opposing lateral walls (58) and two transverse walls (60) adjoining the latter, with a hollow profile carrier section allocated to the longitudinal member (30) and adjusted as a plug section (42) to the inner cross section of the longitudinal member (30), and the other end area of the mount is provided with collar organs (70, 86) that protrude from it, and are directed parallel to the transverse walls (60), and wherein the collar organs (70, 86) as collar plates protrude from the face edge (65) of the other end area (65) parallel to the middle line (M) of the mount (41, 41a, 41b, 41c, 41d), and the plug section (42) on the longitudinal members (30) can be fastened with at least two setscrews (96), which penetrate through the lateral walls (58) of the plug section (42),
**characterized in that**
profile walls (14, 16) arranged on the bumper (10) spaced apart from each other as a compression belt or tension belt and a pair of flank walls (18) joining the latter form a hollow profile (12), that the mount (41) exhibits several chambers (66, 67) parallel to its middle line (M) that are bordered by the two lateral walls (58) along with inner plates (62) extending between the latter, that a middle chamber (66) of the plug section (42) is provided and bordered by two outer chambers (67) adjoining the transverse walls (60), that a transverse axis (Q) runs at a distance (z) from the end edge (64) of the plug section (42) and determines the position of insert openings (68) in the edge strips (58a) of the lateral walls (58), and that an insert element (80) is incorporated into the outer chamber (67) that exhibits a tubular channel (84) to be allocated to the insert openings (68) of the plug section (42) with its transverse axis (Q).

2. The bumper according to claim 1, **characterized in that** the collar plate is molded onto one of the transverse plates (60) of the plug section (42) by a longitudinally curved tongue section (72).

3. The bumper according to claim 1, **characterized in that** the collar organs (86) are two grooved moldings with upper edges (88) of flank walls (87) bordering a groove floor (89) pointing away from the middle line (M) of the mount (41a).

4. The bumper according to claim 1, **characterized in that** the collar organs (70, 86) and the mount (41, 41a to 41d) are allocated to the flank walls (18) of the bumper (10) in the use position, and detachably joined with the latter.

5. The bumper according to one of claims 1 to 4, **characterized in that** a longitudinal strip (59) is molded into the lateral wall (58) of the mount (41) at roughly the middle of its height, wherein its width (g) preferably corresponds to about one third to half the height (h) of the mount (41, 41a to 41d).

6. The bumper according to claim 5, **characterized in that** the longitudinal strip (59) is bordered on either side by a respective folded strip (57), which is slanted outwardly up from the longitudinal strip (59), and molded onto edge strips (58a) running on either side in the plane of the lateral wall (58).

7. The bumper according to one of claims 1, 5 or 6, **characterized in that** the mount (41, 41a to 41d) incorporates a respective one of the inner plates (62) extending between the two lateral walls (58) on either side of the longitudinal strip (59) or its folded strips (57).

8. The bumper according to claim 1 or 7, **characterized in that** the inner plate (62) runs inside two planes determined by the plate-like collar organs (70).

9. The bumper according to claim 3 or 6, **characterized in that** the flank wall (87) runs roughly in the plane of one of the edge strips (58a) of the lateral wall (58).

10. The bumper according to claim 3 or 9, **characterized in that** the grooved floor (89) of the grooved collar organ (86) passes over into an upwardly directed inclination plane (90) that is spaced apart (f₁) from its grooved face (91) and secured at the other end to the transverse plate (60).

11. The bumper according to one of claims 3, 9 or 10, **characterized in that** both the grooved floor (89) of the grooved collar organ (86) and the flank walls (87) consist of dual layers.

12. The bumper according to claim 11, **characterized in that** the grooved floor (89) of the grooved collar organ (86) contains abutting sections (60a, 62a) of a transverse plate and inner plate (62).

13. The bumper according to one of claims 3 or 9 to 12, **characterized in that** the flank wall (87) contains abutting sections (58b) of the lateral wall (58) of the mount (41), in particular sections of its edge strip (58a).

14. The bumper according to one of claims 5 to 15, **characterized in that** the respective end edge (59e) of the longitudinal strip (59) over which the two grooved moldings (86) of the mount (41a) axially project is provided with a collar strip (92) on either side of the middle line (M).

15. The bumper according to claim 14, **characterized in that** the collar strip (92) is molded onto the free end of the longitudinal strip (59).

16. The bumper according to one of claims 2, 3, or 9 to 15, **characterized by** openings (55, 55e) in the collar plate (70) or grooved molding (86) that receive screws.

17. The bumper according to claim 1, **characterized in that** the distance (z) corresponds to at most the width (b) of the plug section (42).

18. The bumper according to claim 1, **characterized in that** the tubular channel (84) penetrates a block-like body (82), which is molded onto a surface of a floor plate (76) of the insert element (80).

19. The bumper according to claim 18, **characterized in that** the floor plate (76) ends at an edge groove (78) that borders a slit (79) with the surface (77) of the floor plate (76) remote from the block body (82).

20. The bumper according to claim 19, **characterized in that** the edge groove (78) accommodates the transverse edge (63) of the adjoining inner plate (62) in the installation position of the block body (82).

21. The bumper according to claim 1, **characterized in that** the height (i) of the insert element (80) corresponds approximately to the height of the outer chamber (67).

22. The bumper according to one of claims 18 to 21, **characterized in that**, in the installation position of the block body (82), the end face (83) thereof externally adjoins the outer surface of a grooved transverse recess, which is molded into the assigned transverse plate.

23. The bumper according to one of claims 1 to 22, **characterized in that**, the end edge (64) of the plug section (42) is inclined at an angle (t) to the middle line (M) of the mount (41a).

24. The bumper according to claim 1 or 23, **characterized by** three setscrews (96).

## Revendications

1. Pare-chocs (10) comprenant des supports de fixation (41, 41ₐ, 41_{b}, 41_{c}, 41_{d}) devant être montés sur celui-ci pour la fixation sur des supports longitudinaux (30) d'un véhicule, le support de fixation (41, 41ₐ, 41_{b}, 41_{c}, 41_{d}) étant réalisé sous forme de profilé creux présentant deux parois latérales opposées (58) et deux parois transversales (60) se raccordant à celles-ci avec une portion de support de profilé creux associée au support longitudinal (30), adaptée en tant que portion enfichable (42) à la section transversale interne du support longitudinal (30), et l'autre région d'extrémité du support de fixation étant pourvue d'organes saillants (70, 86) faisant saillie depuis celui-ci, et ceux-ci étant orientés parallèlement aux parois transversales (60), et les organes saillants (70, 86) faisant saillie depuis l'arête frontale (65) de l'autre région d'extrémité (65) en tant que plaques saillantes parallèlement à l'axe médian (M) du support de fixation (41, 41ₐ, 41_{b}, 41_{c}, 41_{d}) et la portion enfichable (42) pouvant être raccordée au niveau du support longitudinal (30) à au moins deux goujons filetés (96) qui traversent les parois latérales (58) de la portion enfichable (42),
**caractérisé en ce que**
des parois profilées (14, 16) disposées au niveau du pare-chocs (10) à distance les unes des autres en tant que bande de pression ou bande de traction et une paire de parois de flanc (18) reliant celles-ci forment un profilé creux (12), **en ce que** le support de fixation (41) présente plusieurs chambres (66, 67) parallèles à son axe médian (M), lesquelles sont limitées par les deux parois latérales (58) ainsi que par des plaques internes (62) s'étendant entre celles-ci, **en ce qu'**une chambre centrale (66) de la portion enfichable (42) est prévue, laquelle est limitée par deux chambres extérieures (67) se raccordant aux parois transversales (60), **en ce qu'**à la distance (z) de l'arête d'extrémité (64) de la portion enfichable (42) s'étend un axe transversal (Q) qui définit la position d'orifices d'insertion (68) dans les bandeaux de bord (58ₐ) des parois latérales (58), et **en ce que** dans la chambre extérieure (67) est introduit un élément d'insertion (80), lequel présente un canal tubulaire (84) devant être associé aux orifices d'insertion (68) de la portion enfichable (42) avec son axe transversal (Q).

2. Pare-chocs selon la revendication 1, **caractérisé en ce que** la plaque saillante est façonnée par une portion de langue (72) courbée en coupe longitudinale au niveau de l'une des plaques transversales (60) de la portion enfichable (42).

3. Pare-chocs selon la revendication 1, **caractérisé en ce que** les organes saillants (86) sont deux parties façonnées de type rigoles avec des arêtes supérieures (88), orientées à l'écart de l'axe médian (M) du support de fixation (41ₐ), de parois de flanc (87) limitant un fond de rigole (89).

4. Pare-chocs selon la revendication 1, **caractérisé en ce que** les organes saillants (70, 86) du support de fixation (41, 41ₐ à 41_{d}) sont associés dans la position d'utilisation aux parois de flanc (18) du pare-chocs (10) et sont connectés de manière détachable à celui-ci.

5. Pare-chocs selon l'une quelconque des revendications 1 à 4, **caractérisé en ce que** dans la paroi latérale (58) du support de fixation (41) est façonné, approximativement à mi-hauteur, un bandeau longitudinal (59) dont la largeur (g) correspond de préférence approximativement à un tiers à la moitié de la hauteur (h) du support de fixation (41, 41ₐ à 41_{d}).

6. Pare-chocs selon la revendication 5, **caractérisé en ce que** le bandeau longitudinal (59) est limité des deux côtés par un bandeau plié (57) respectif qui est incliné vers l'extérieur et vers le haut depuis le bandeau longitudinal (59) et est façonné au niveau de bandeaux de bord (58ₐ) s'étendant de part et d'autre dans le plan de la paroi latérale (58).

7. Pare-chocs selon l'une quelconque des revendications 1, 5 ou 6, **caractérisé en ce que** dans le support de fixation (41, 41ₐ à 41_{d}), de part et d'autre du bandeau longitudinal (59) ou depuis son bandeau plié (57), est à chaque fois disposée l'une des plaques internes (62) s'étendant entre les deux parois latérales (58).

8. Pare-chocs selon la revendication 1 ou 7, **caractérisé en ce que** la plaque interne (62) s'étend à l'intérieur de deux plans définis par les organes saillants (70) en forme de plaque.

9. Pare-chocs selon la revendication 3 ou 6, **caractérisé en ce que** la paroi de flanc (87) s'étend approximativement dans le plan de l'un des bandeaux de bord (58ₐ) de la paroi latérale (58).

10. Pare-chocs selon la revendication 3 ou 9, **caractérisé en ce que** le fond de rigole (89) de l'organe saillant en forme de rigole (86) se prolonge à une distance (f₁) vers son front de rigole (91) dans un plan incliné orienté vers le haut (90), qui est joint à l'autre extrémité à la plaque transversale (60).

11. Pare-chocs selon l'une quelconque des revendications 3, 9 ou 10, **caractérisé en ce que** le fond de rigole (89) de l'organe saillant en forme de rigole (86) ainsi que les parois de flanc (87) sont réalisés en deux couches.

12. Pare-chocs selon la revendication 11, **caractérisé en ce que** le fond de rigole (89) de l'organe saillant en forme de rigole (86) contient des portions juxtaposées (60ₐ, 62ₐ) d'une plaque transversale ainsi que d'une plaque interne (62).

13. Pare-chocs selon l'une quelconque des revendications 3 ou 9 à 12, **caractérisé en ce que** la paroi de flanc (87) contient des portions juxtaposées (58_{b}) de la paroi latérale (58) du support de fixation (41), en particulier des portions de ses bandeaux de bord (58ₐ).

14. Pare-chocs selon l'une quelconque des revendications 5 à 13, **caractérisé en ce que** l'arête d'extrémité (59ₑ) du bandeau longitudinal (59) au-delà de laquelle dépassent axialement les deux parties façonnées de type rigoles (86) du support de fixation (41ₐ) est pourvue des deux côtés de l'axe médian (M) à chaque fois d'un bandeau saillant (92).

15. Pare-chocs selon la revendication 14, **caractérisé en ce que** le bandeau saillant (92) est façonné au niveau de l'extrémité libre du bandeau longitudinal (59).

16. Pare-chocs selon l'une quelconque des revendications 2, 3 ou 9 à 15, **caractérisé par** des orifices (55, 55ₑ) recevant des vis de la plaque saillante (66) ou de la partie façonnée de type rigole (86).

17. Pare-chocs selon la revendication 1, **caractérisé en ce que** la distance (z) correspond au maximum à la largeur (b) de la portion enfichable (42).

18. Pare-chocs selon la revendication 1, **caractérisé en ce que** le canal tubulaire (84) traverse un corps de type bloc (82), qui est façonné au niveau d'une face d'une plaque de fond (76) de l'élément d'insertion (80).

19. Pare-chocs selon la revendication 18, **caractérisé en ce que** la plaque de fond (76) se termine au niveau d'une rigole d'arête (78) qui limite une fente (79) avec la surface (77) de la plaque de fond (76) éloignée du corps de type bloc (82).

20. Pare-chocs selon la revendication 19, **caractérisé en ce que** dans la position installée du corps de type bloc (82), la rigole d'arête (78) reçoit l'arête transversale (63) de la plaque interne (62) s'appliquant contre elle.

21. Pare-chocs selon la revendication 1, **caractérisé en ce que** la hauteur (i) de l'élément d'insertion (80) correspond approximativement à la hauteur de la chambre extérieure (67).

22. Pare-chocs selon l'une quelconque des revendications 18 à 21, **caractérisé en ce que** dans la position installée du corps de type bloc (82), sa face frontale (83) s'applique du côté extérieur contre la face extérieure d'un creux transversal de type rigole qui est façonné dans la plaque transversale associée.

23. Pare-chocs selon l'une quelconque des revendications 1 à 22, **caractérisé en ce que** l'arête d'extrémité (64) de la portion enfichable (42) est inclinée suivant un angle (t) par rapport à l'axe médian (M) du support de fixation (41ₐ).

24. Pare-chocs selon la revendication 1 ou 23, **caractérisé par** trois goujons filetés (96).
